# EUROPEAN PATENT APPLICATION

(11) **EP 4 325 647 A1**
(43) Date of publication of application: **21.02.2024**
(21) Application number: 23801293.4
(22) Date of filing: 12.01.2023
(51) Int. Cl.: H01M 50/358, H01M 50/211, H01M 50/35, H01M 50/249, H01M 50/383

(54) **BATTERY MODULE, BATTERY PACK, AND VEHICLE COMPRISING SAME**

(30) Priority: 26.05.2022 KR 20220064723
(71) Applicant: LG ENERGY SOLUTION, LTD., Seoul 07335 (KR)
(72) Inventor: JANG, Sung-Hwan, Daejeon 34122 (KR); SEONG, Jun-Yeob, Daejeon 34122 (KR); PARK, Myung-Ki, Daejeon 34122 (KR)
(74) Representative: Plasseraud IP
(86) International application number: PCT/KR2023/000610
(87) International publication number: WO 2023/229139

(57) **Abstract**

There are provided a battery module configured to ensure structural stability in case of a thermal event, and a battery pack and a vehicle comprising the same.

The battery pack according to an aspect of the present disclosure includes a battery module having a venting path configured to prevent venting gas or flame from being vented toward a front side where a module terminal is disposed, and guide the venting of the venting gas or flame toward a rear side, wherein the venting path becomes wider as it goes to the rear side; and a pack housing accommodating the battery module.

## Description

### TECHNICAL FIELD

The present application claims the benefit of Korean Patent Application No. 10-2022-0064723 filed on May 26, 2022 with the Korean Intellectual Property Office, the disclosure of which is incorporated herein by reference in its entirety.

The present disclosure relates to a battery module, and a battery pack and a vehicle comprising the same, and more particularly, to a battery module configured to ensure structural stability in case of a thermal event, and a battery pack and a vehicle comprising the same.

### BACKGROUND ART

Recently, with the rapid increase in demand for portable electronic products such as laptop computers, video cameras and mobile phones and ever-increasing development of electric vehicles, accumulators for energy storage, robots and satellites, many studies are being conducted on high performance secondary batteries that can be repeatedly recharged.

Currently, commercially available secondary batteries include nickel-cadmium batteries, nickel-hydrogen batteries, nickel-zinc batteries, lithium secondary batteries and the like. Among them, lithium secondary batteries have little or no memory effect, and are gaining more attention than nickel-based secondary batteries as recharging can be done whenever it is convenient. Further, lithium secondary batteries provide a low self-discharge rate with high energy density capability.

The lithium secondary batteries mainly use a lithium-based oxide and a carbon material as a positive electrode active material and a negative electrode active material, respectively. In addition, the lithium secondary batteries include an electrode assembly including a positive electrode plate and a negative electrode plate respectively coated with the positive electrode active material and the negative electrode active material and a separator interposed between the positive electrode plate and the negative electrode plate, and a hermetically sealed packaging or battery case in which the electrode assembly is received together with an electrolyte solution.

According to the shape of the battery case, lithium secondary batteries may be classified into can-type secondary batteries in which the electrode assembly is included in a metal can and pouch-type secondary batteries in which the electrode assembly is included in a pouch made of an aluminum laminate sheet. The can-type secondary batteries may be sub-classified into cylindrical batteries and prismatic batteries according to the shape of the metal can.

Here, the pouch of the pouch-type secondary batteries may be largely divided into a lower sheet and an upper sheet that covers the lower sheet. In this instance, the pouch accommodates the electrode assembly including the positive electrode, the negative electrode and the separator stacked and wound together. Additionally, after the electrode assembly is received, the edge of the upper sheet and the lower sheet is sealed by heat welding. Additionally, an electrode tab drawn from each electrode may be coupled to an electrode lead, and an insulation film may be added to the electrode lead at an area of contact with the sealing portion.

The pouch-type secondary batteries may be so flexible that they may be constructed in various shapes. Additionally, the pouch-type secondary batteries may realize secondary batteries of the same capacity with smaller volume and mass.

The lithium secondary batteries are used to construct a battery module or a battery pack by stacking a plurality of battery cells themselves or in a cartridge to form a densely packed structure and electrically connecting them to provide high voltage and high current.

In the battery pack configuration, typically, one of the important issues is safety. In particular, when a thermal event occurs in any of the battery cells included in the battery pack, it is necessary to suppress the propagation of the event to the other battery cell. Unless thermal propagation between the battery cells is properly suppressed, the thermal event may spread to the other battery cell included in the battery pack, causing a greater problem such as a fire or explosion in the battery pack. Moreover, the fire or explosion in the battery pack may cause human casualties and financial losses and damages. Accordingly, the battery pack needs a configuration for properly controlling the thermal event.

### DISCLOSURE

### Technical Problem

The present disclosure is designed to solve the above-described problem, and therefore the present disclosure is directed to providing a battery module configured to ensure structural stability in case of a thermal event, and a battery pack and a vehicle comprising the same.

However, the technical problem to be solved is not limited to the above-described problem, and these and other problems will be clearly understood by those skilled in the art from the detailed description provided below.

### Technical Solution

To achieve the above-described objective, a battery pack according to an aspect of the present disclosure includes a battery module having a venting path configured to prevent venting gas or flame from being vented toward a front side where a module terminal is disposed, and guide the venting of the venting gas or flame toward a rear side, wherein the venting path becomes wider as it goes to the rear side, and a pack housing accommodating the battery module.

In an embodiment, the pack housing may include a support frame configured to lift up the battery module such that the front side is higher than the rear side.

In an embodiment, the support frame may further include a sloping portion, wherein the sloping portion slopes with its height increasing as it goes to one side, and is disposed below the battery module, and the front side of the battery module may be disposed on one side of the sloping portion.

In an embodiment, the support frame may further include a module fixing portion configured to support the rear side of the battery module.

In an embodiment, the pack housing may further include an outlet port, through which the venting gas or flame is vented out of the pack housing, and the rear side of the battery module may face the outlet port.

In an embodiment, the outlet port may be formed in the pack housing at a location after the venting gas or flame is bent at least once.

In an embodiment, the outlet port may be disposed in the pack housing on an opposite side to a location at which the battery module is disposed with respect to the support frame.

In an embodiment, the outlet port may be disposed in the pack housing on the opposite side to the front side of the battery module with respect to the support frame.

In an embodiment, the pack housing may further include a flow channel in communication with the venting path and the outlet port.

In an embodiment, the battery pack may further include a guide portion disposed at a location corresponding to a corner of the pack housing and configured to guide the venting gas or flame toward the outlet port.

In an embodiment, the battery module may include a pair of battery modules with respect to the support frame, and the pair of battery modules may be arranged such that the front side of each battery module faces each other in the pack housing.

In an embodiment, the support frame may further include a reinforcement portion to define the pair of battery modules, the reinforcement portion being connected to the pack housing.

In an embodiment, the battery module may include a plurality of battery modules along a lengthwise direction of the support frame, and the plurality of battery modules may be separated from each other by a partition connected to the support frame when viewed in the lengthwise direction of the support frame.

Additionally, a vehicle according to another aspect of the present disclosure includes at least one battery pack according to an aspect of the present disclosure as described above.

Additionally, a battery module according to still another aspect of the present disclosure includes a cell assembly, and a module case accommodating the cell assembly, and having a venting path configured to prevent venting gas or flame from being vented toward a front side where a module terminal is disposed, and guide the venting of the venting gas or flame toward a rear side, wherein the venting path becomes wider as it goes to a rear side.

### Advantageous Effects

According to an embodiment of the present disclosure, with the venting channel along which venting gas and/or flame may be easily vented in a direction, it is possible to minimize the venting of venting gas and/or flame in a direction in which the module terminal is disposed in the battery module.

Accordingly, it is possible to prevent fires between the battery cells in one battery module.

Additionally, it is possible to prevent multiple simultaneous fires between the plurality of battery modules by minimizing the venting of venting gas and/or flame toward the module terminal.

Additionally, it is possible to prevent damage to the electrical connection member connecting the module terminals between the plurality of battery modules, thereby preventing short circuits between the battery modules and ensuring electrical stability.

Additionally, it is possible to suppress the cause of fires in the battery pack and enhance structural stability of the battery pack.

Many other additional effects may be achieved by many other embodiments of the present disclosure. Although the effects of the present disclosure are described in detail in each embodiment, the description of the effects that can be easily understood by those skilled in the art is omitted.

### DESCRIPTION OF DRAWINGS

The accompanying drawings illustrate exemplary embodiments of the present disclosure, and together with the following detailed description, serve to provide a further understanding of the technical aspect of the present disclosure, and thus the present disclosure should not be construed as being limited to the drawings.
FIG. 1 is a diagram showing a battery pack according to an embodiment of the present disclosure.
FIG. 2 is a diagram illustrating a detailed structure of the battery pack of FIG. 1.
FIG. 3 is a diagram showing a battery module of the battery pack of FIG. 2.
FIG. 4 is a side view of the battery module of FIG. 3.
FIG. 5 is a diagram showing thermal runaway in the battery module of FIG. 3.
FIG. 6 is a cross-sectional view of FIG. 1, taken along the line A-A'.
FIGS. 7 and 8 are diagrams showing an example of the venting of venting gas or flame in case of thermal runaway in a battery module.
FIGS. 9 and 10 are diagrams showing another example of the venting of venting gas or flame in case of thermal runaway in a battery module.
FIG. 11 is a diagram showing a battery pack according to a second embodiment of the present disclosure.
FIG. 12 is a diagram showing a battery pack according to a third embodiment of the present disclosure.
FIG. 13 is a diagram showing a battery pack according to a fourth embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made thereto at the time that the application was filed.

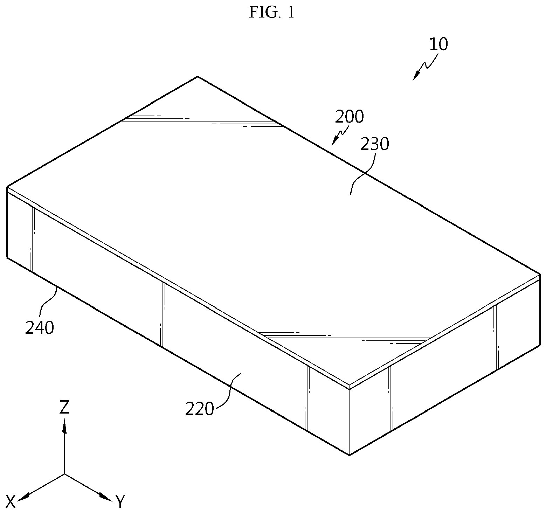

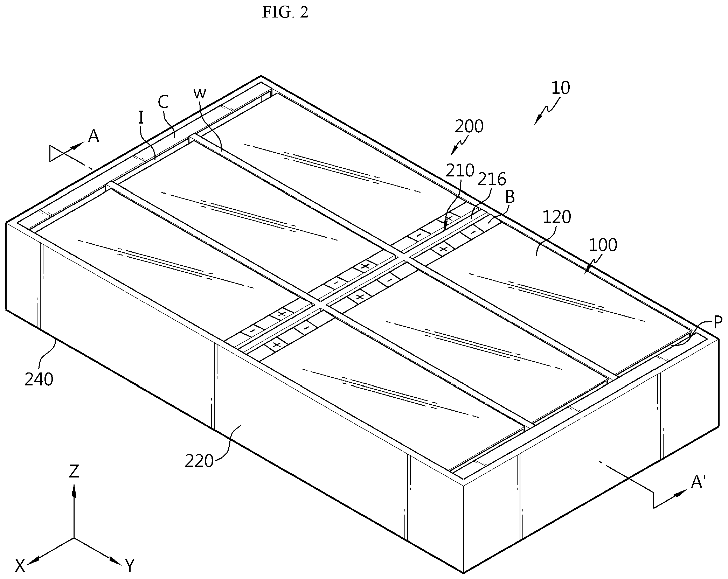

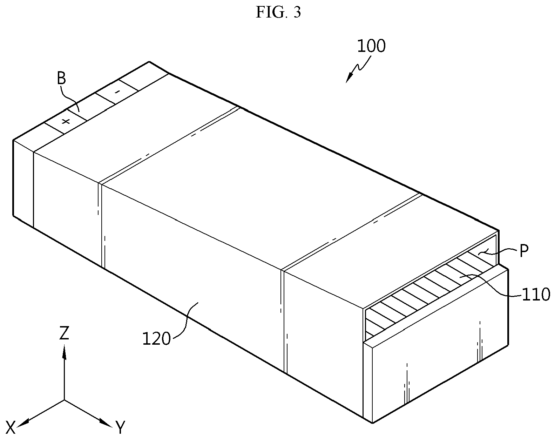

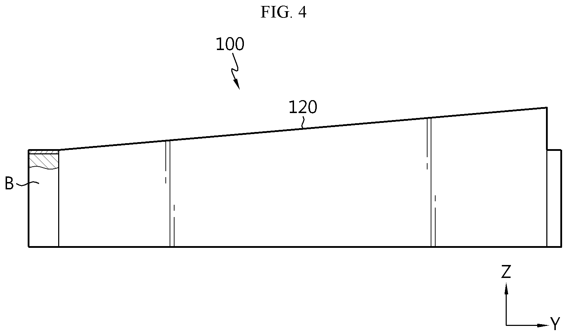

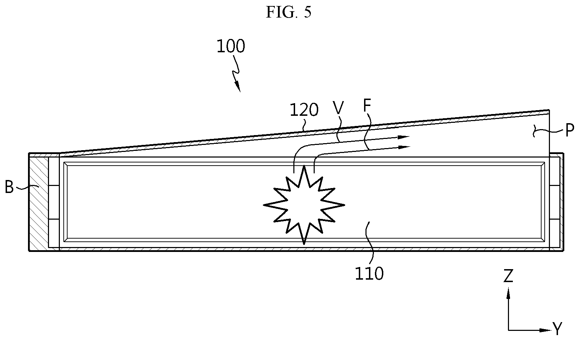

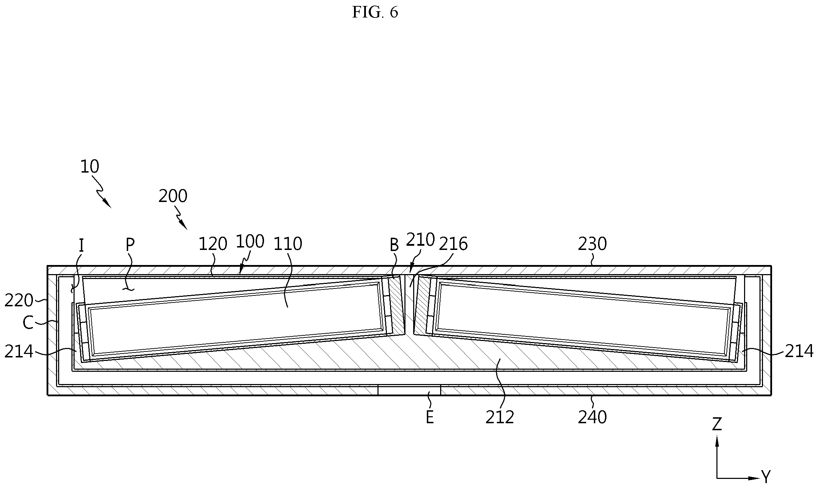

FIG. 1 is a diagram showing a battery pack 10 according to an embodiment of the present disclosure, FIG. 2 is a diagram illustrating a detailed structure of the battery pack 10 of FIG. 1, FIG. 3 is a diagram showing a battery module 100 of the battery pack 10 of FIG. 2, FIG. 4 is a side view of the battery module 100 of FIG. 3, FIG. 5 is a diagram showing thermal runaway in the battery module 100 of FIG. 3, and FIG. 6 is a cross-sectional view of FIG. 1, taken along the line A-A' (specifically, FIG. 6 is a cross-sectional view of the battery pack 10 of FIG. 1, taken along the line A-A' on a YZ plane). In this instance, in FIG. 2, the illustration of a cover 230 as described below is omitted. Additionally, in FIG. 5, venting gas and flame as described below are indicated by 'V' and 'F', respectively.

In an embodiment of the present disclosure, the X axis direction shown in the drawings may refer to a lengthwise direction of a pack housing 200 as described below, the Y axis direction may refer to a horizontal direction of the pack housing 200, perpendicular to the X axis direction on a horizontal plane (an XY plane), and the Z axis direction may refer to a vertical direction perpendicular to the X axis direction and the Y axis direction.

Referring to FIGS. 1 to 6, the battery pack 10 according to an embodiment of the present disclosure may include the battery module 100 and the pack housing 200.

The battery module 100 may include a cell assembly 110 and a module case 120.

The cell assembly 110 may include at least one battery cell. Here, the battery cell may refer to a secondary battery. The battery cell may include a pouch-type battery cell, a cylindrical battery cell or a prismatic battery cell. In an example, the battery cell may be a pouch-type battery cell.

The module case 120 may accommodate the cell assembly 110. To this end, the module case 120 may have an internal accommodation space in which the cell assembly 110 is received. The module case 120 may include a material having high heat resistance and strength. Additionally, the battery module 100 may further include a module terminal B on the front side of the module case 120, and the module terminal B may be connected to the cell assembly 110. In an example, the module terminal B may include a positive module terminal and a negative module terminal. The module terminal may be electrically connected to electronic control components of the battery pack 10, such as a Battery Management System (BMS), a current sensor and a fuse.

The pack housing 200 may accommodate the battery module 100. To this end, the pack housing 200 may include an internal accommodation space in which the battery module 100 is received. Additionally, the pack housing 200 may include a material having high heat resistance and strength.

In the typical battery pack, an event such as thermal runaway may occur in the specific battery module. In this case, high temperature and high pressure venting gas may be generated in the specific battery module, and when the venting gas encounters oxygen, flame may occur inside or outside of the battery module.

Since the conventional battery module includes a cell assembly in a hermetically sealed module case, there is a very high likelihood that the module case will collapse and explode due to the absence of a proper venting path of venting gas or flame. In this case, venting gas or flame may be vented toward the module terminal of the battery module, so there is a risk that greater damage will occur.

Additionally, there is a high risk that the flame produced in the battery module will spread to the other battery module adjacent to the specific battery module, and as a consequence, multiple simultaneous fires may occur in the plurality of battery modules. Since the conventional battery pack includes the plurality of battery modules in the hermetically sealed pack housing and has no proper venting path of venting gas or flame, the battery pack is vulnerable to the multiple simultaneous fires.

To solve this problem, the module case 120 of the battery module 100 of the present disclosure may have a venting path P configured to prevent venting gas and/or flame from being vented toward the front side where the module terminal B is disposed, and guide the venting of venting gas and/or flame toward the rear side, and the venting path P may become wider as it goes to the rear side. For example, the module case 120 may be configured to slope upward as it goes to the rear side when viewed as a whole.

That is, the battery module 100 may have the venting path P configured to prevent venting gas and/or flame from being vented toward the front side where the module terminal B is disposed, and guide the venting of venting gas and/or flame toward the rear side, and the venting path P may become wider as it goes to the rear side. Accordingly, it is possible to guide venting gas and/or flame caused by thermal runaway in the battery module 100 to be spontaneously vented toward the rear side of the battery module 100 through the venting path P configured as described above.

According to this exemplary configuration of the present disclosure, since the venting path P is configured to guide venting gas and/or flame to be vented in a direction, it is possible to minimize the venting of venting gas and/or flame in a direction in which the module terminal B is disposed in the battery module 100.

Through the above-described venting structure, it is possible to prevent the occurrence of fires between battery cells in one battery module 100. Additionally, it is possible to minimize the venting of venting gas and/or flame toward the module terminal B, thereby preventing multiple simultaneous fires between the plurality of battery modules 100. Additionally, it is possible to prevent damage to an electrical connection member (for example, a module busbar) connecting the module terminals B between the plurality of battery modules 100, thereby preventing short circuits between the battery modules 100 and ensuring electrical stability.

To sum, according to the above-described exemplary configuration of the present disclosure, it is possible to suppress the cause of fires in the battery pack 10, and enhance structural stability of the battery pack 10.

Hereinafter, the detailed structure of the battery pack 10 will be described in more detail.

Referring back to FIGS. 1, 2 and 6, the pack housing 200 may include a support frame 210.

The support frame 210 may be configured to lift up the battery module 100 such that the front side is higher than the rear side. Since the support frame 210 lifts up the battery module 100 such that the front side is higher than the rear side, it is possible to provide more directionality to the flow of venting gas and/or flame being vented out of the battery module 100 through the venting path P.

That is, the support frame 210 may lift up the battery module 100 such that the front side is higher than the rear side to direct the flow of venting gas and/or flame toward the rear side of the battery module 100. Accordingly, it is possible to guide the venting of venting gas and/or flame caused by thermal runaway in the battery module 100 toward the rear side of the battery module 100 more spontaneously.

By the above-described configuration, it is possible to minimize the venting of venting gas and/or flame in the direction in which the module terminal B is disposed in the battery module 100.

The pack housing 200 may further include a side frame 220, the cover 230 and a floor frame 240.

The side frame 220 may form the side of the pack housing 200. The side frame 220 may be disposed such that at least part faces the rear side of the battery module 100.

The cover 230 may be coupled onto the side frame 220, and may close the top of the battery module 100. In this instance, in a state that the support frame 210 supports the battery module 100, the top of the module case 120 may be disposed in parallel to the cover 230 in the vertical direction.

The floor frame 240 may form the bottom of the pack housing 200, and may be coupled to the side frame 220. In this instance, the support frame 210 may be disposed at higher position than the floor frame 240.

In an example, the support frame 210 may include a sloping portion 212.

The sloping portion 212 may be configured to slope such that the height increases as it goes to one side, and may be disposed below the battery module 100. Additionally, the front side of the battery module 100 may be disposed on one side of the sloping portion 212.

Specifically, the sloping portion 212 may be disposed below the module case 120. Additionally, the front side of the module case 120 where the module terminal B is disposed may be disposed on one side of the sloping portion 212. Additionally, the rear side of the module case 120 may be disposed on the other side of the sloping portion 212 that is lower than one side of the sloping portion 212.

As described above, since the battery module 100 is disposed in the pack housing 200 along the sloping surface of the support frame 210, it is possible to guide the flow of venting gas and/or flame toward the rear side of the battery module 100 more stably. Additionally, since the sloping portion 212 is disposed below the battery module 100 and guides the flow of venting gas and/or flame, the flow of venting gas and/or flame vented from the rear side of the battery module 100 may be guided to slope down in the downward direction of the pack housing 200. Accordingly, it is possible to prevent the venting gas and/or flame from flowing toward a driver disposed above the battery pack 10 in a vehicle (not shown).

Referring back to FIGS. 1, 2 and 6, the support frame 210 may further include a module fixing portion 214.

The module fixing portion 214 may be configured to support the rear side of the battery module 100. In this instance, the module fixing portion 214 may be disposed on the other side of the sloping portion 212, and may extend in the vertical direction.

Specifically, the module fixing portion 214 may be configured to restrict the backward movement of the module case 120 disposed in the sloping portion 212.

As described above, it is possible to fix the position of the battery module 100 disposed in the support frame 210, thereby stably maintaining the flow of venting gas and/or flame in a predetermined direction (toward the rear side of the battery module 100).

Additionally, the pack housing 200 may further include an outlet port E.

The outlet port E may be configured to allow venting gas or flame to be vented out of the pack housing 200. The outlet port E may be formed in the shape of a hole having a predetermined area.

In particular, the rear side of the battery module 100 may face the outlet port E when the battery module 100 is disposed in the support frame 210.

By the above-described configuration, venting gas and/or flame vented through the rear side of the battery module 100 may be easily vented through the outlet port E.

Referring back to FIGS. 1, 2 and 6, the outlet port E may be formed in the pack housing 200 at a location after venting gas or flame is bent at least once.

That is, the outlet port E may be formed in the pack housing 200 at the location after the flow of venting gas and/or flame vented from the rear side of the battery module 100 is changed at least once. In an example, the outlet port E may be formed in the pack housing 200 at a location where venting gas and/or flame passes through the connected part between the side frame 220 and the cover 230. Alternatively, the outlet port E may be formed in the pack housing 200 at a location where venting gas and/or flame passes through the connected part between the side frame 220 and the cover 230 and the connected part between the side frame 220 and the floor frame 240.

Accordingly, since venting gas and/or flame is vented out of the pack housing 200 at the location after the flow of venting gas and/or flame vented from the battery module 100 is changed at least once, it is possible to allow flame having strong linearity to be vented out the pack housing 200 slowly, thereby minimizing the likelihood that the flame becomes a fire. Additionally, it is possible to minimize the backflow of venting gas and/or flame into the battery module 100.

Additionally, the outlet port E may be disposed in the pack housing 200 on the opposite side to the location at which the battery module 100 is disposed with respect to the support frame 210.

In an example, the outlet port E may be disposed below the support frame 210 in the pack housing 200. For example, the outlet port E may be disposed in the floor frame 240.

That is, the outlet port E may be formed in the pack housing 200 at a location after the flow of venting gas and/or flame is changed multiple times. Accordingly, it is possible to allow flame having strong linearity to be vented out of the pack housing 200 more slowly, thereby minimizing the likelihood that the flame becomes a fire. Additionally, it is possible to further minimize the backflow of venting gas and/or flame into the battery module 100.

In particular, the outlet port E may be disposed in the pack housing 200 on the opposite side to the front side of the battery module 100 with respect to the support frame 210.

In an example, the outlet port E may be disposed below the support frame 210 in the pack housing 200. For example, the outlet port E may be formed in the floor frame 240 on the opposite side to the front side of the battery module 100 with respect to the support frame 210.

That is, the outlet port E may be formed in the pack housing 200, spaced at the maximum distance apart from the battery module 100 in which venting gas and/or flame may be produced. Accordingly, it is possible to allow flame having strong linearity to be vented out of the pack housing 200 as slowly as possible, thereby minimizing the likelihood that the flame becomes a fire. Additionally, it is possible to suppress the backflow of venting gas and/or flame into the battery module 100 to the maximum extent.

Referring back to FIGS. 2 and 6, the pack housing 200 may further include a flow channel C.

The flow channel C may be in communication with the venting path P and the outlet port E of the battery module 100. The flow channel C may provide a flow space to allow the venting gas and/or flame vented toward the rear side of the battery module 100 through the venting path P to be vented out of the pack housing 200. Additionally, the rear side of the battery module 100 may face an entry I of the flow channel C.

The flow channel C may be disposed in the pack housing 200. Specifically, the side of the flow channel C may be surrounded by the side frame 220. Additionally, the cover 230 may be disposed on top of the flow channel C. Additionally, the floor frame 240 may be disposed on bottom of the flow channel C.

By the above-described configuration, it is possible to prevent the venting gas and/or flame vented from the rear side of the battery module 100 from randomly flowing into the pack housing 200, and allow the venting gas and/or flame to be vented out of the pack housing 200 more stably by the guidance of the flow channel C.

Additionally, the entire flow channel C may be bent at least once. In particular, the bottom of the flow channel C may be disposed in the pack housing 200 on the opposite side to the location at which the battery module 100 is disposed with respect to the support frame 210. That is, the flow of venting gas and/or flame vented from the rear side of the battery module 100 may be changed at least once in the flow channel C before it is vented through the outlet port E. Accordingly, it is possible to allow flame having strong linearity to be vented out of the pack housing 200 slowly, thereby minimizing the likelihood that the flame becomes a fire. Additionally, it is possible to minimize the backflow of venting gas and/or flame into the battery module 100.

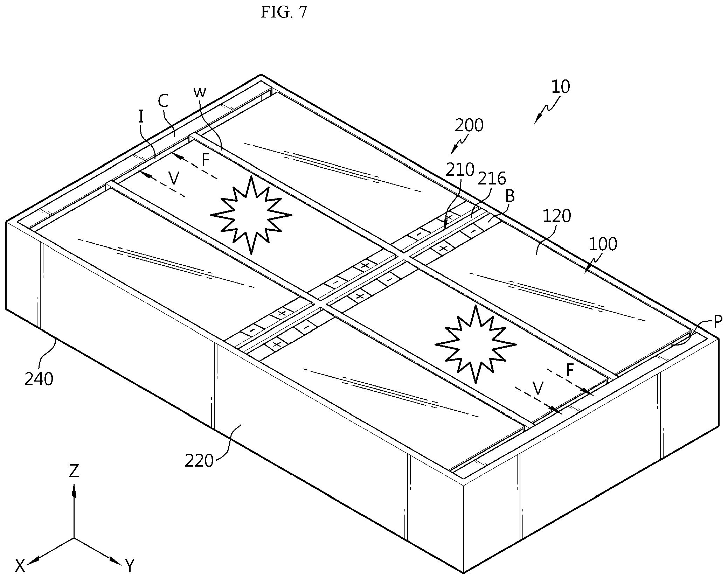

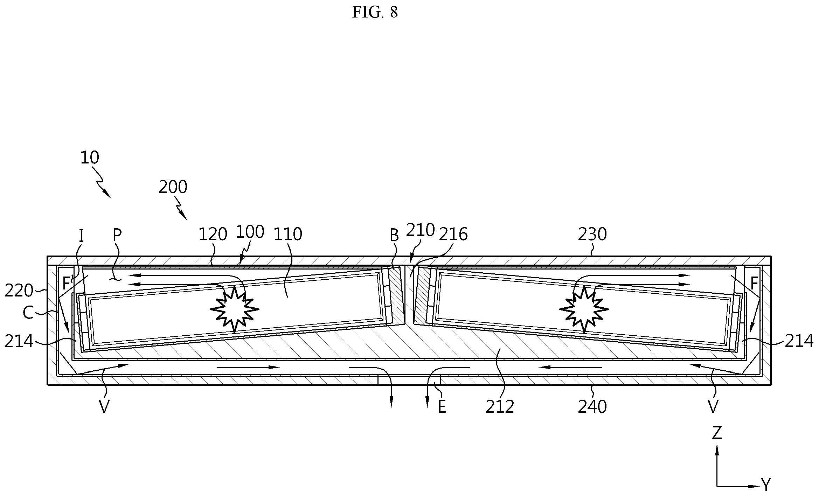

FIGS. 7 and 8 are diagrams showing examples of the venting of venting gas or flame in case of thermal runaway in the battery module 100. In this instance, in FIGS. 7 and 8, venting gas and flame are indicated by 'V' and 'F', respectively.

Referring to FIGS. 2 and 6 to 8, a pair of battery modules 100 may be included with respect to the support frame 210. In this instance, the pair of battery modules 100 may be arranged along the horizontal direction of the pack housing 200.

Additionally, the pair of battery modules 100 may be arranged such that the front side of each battery module faces each other in the pack housing 200. In this instance, the rear side of each of the pair of battery modules 100 may face the entry I of the flow channel C. To this end, the flow channel C may be disposed on opposite sides such that a pair of entries I face each other with respect to the support frame 210.

That is, the pair of battery modules 100 may be arranged such that the front side of each battery module 100 faces each other, where the module terminal B is disposed. By the above-described configuration, it is possible to suppress venting gas and/or flame vented from the rear side of each of the pair of battery modules 100 from being vented toward the module terminal B. Additionally, it is possible to minimize multiple simultaneous fires between the battery modules 100 facing each other.

In an example, the support frame 210 may further include a reinforcement portion 216.

The reinforcement portion 216 may be configured to define the pair of battery modules 100 and connect to the pack housing 200. In this instance, the reinforcement portion 216 may defined the pair of battery modules 100 in the horizontal direction of the pack housing 200.

Specifically, the reinforcement portion 216 may be disposed at approximately center of the sloping portion 212. The sloping portion 212 may be symmetrically formed with respect to the reinforcement portion 216 when viewed as a whole. Additionally, the reinforcement portion 216 may be configured to support a part of the front side of each of the pair of battery modules 100.

Additionally, the reinforcement portion 216 may be connected to the cover 230 of the pack housing 200. In an example, the reinforcement portion 216 may be bolted to the cover 230, but is not limited thereto.

According to this exemplary configuration of the present disclosure, the reinforcement portion 216 connected to the cover 230 of the pack housing 200 may ensure the overall strength of the battery pack 10.

In addition, since the pair of battery modules 100 are defined through the reinforcement portion 216, it is possible to prevent some of the venting gas and/or flame vented toward the rear side of each of the pair of battery modules 100 from flowing through the space between the top of the battery module 100 and the cover 230 and staying in the pack housing 200.

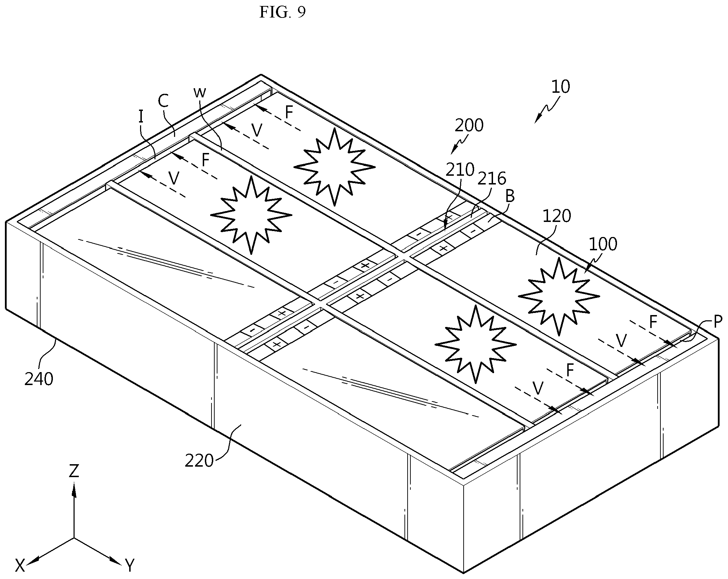

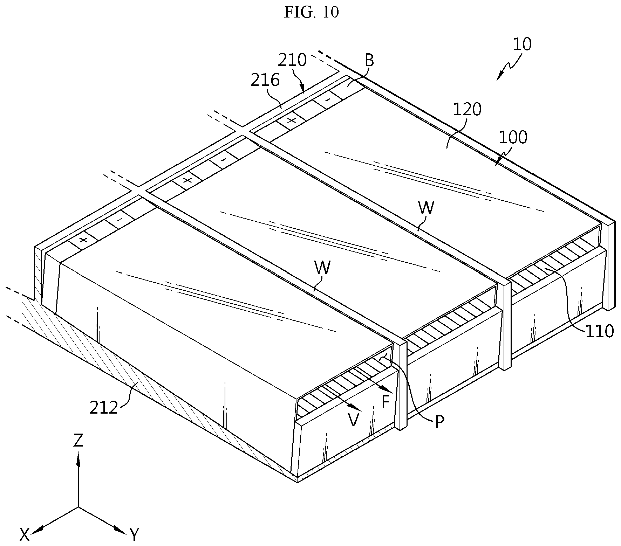

FIGS. 9 and 10 are diagrams showing another example of the venting of venting gas or flame in case of thermal runaway in the battery module 100. In this instance, in FIGS. 9 and 10, venting gas and flame are indicated by 'V' and 'F', respectively.

Referring to FIGS. 2, 6, 9 and 10, a plurality of battery modules 100 may be included along the lengthwise direction of the support frame 210. In this instance, the plurality of battery modules 100 may be separated from each other by a partition W connected to the support frame 210 when viewed in the lengthwise direction of the support frame 210. In an example, the partition W may include a material having high heat resistance and strength.

Additionally, the rear side of each of the plurality of battery modules 100 may be configured to face the entry I of the flow channel C. To this end, the flow channel C may be configured to extend along the lengthwise direction of the pack housing 200.

Each partition W may be connected to the reinforcement portion 216. Additionally, the reinforcement portion 216 may be configured to extend along the lengthwise direction of the pack housing 200, corresponding to the plurality of battery modules 100.

By this configuration, it is possible to suppress multiple simultaneous fires between the adjacent battery modules 100 in the lengthwise direction of the pack housing 200.

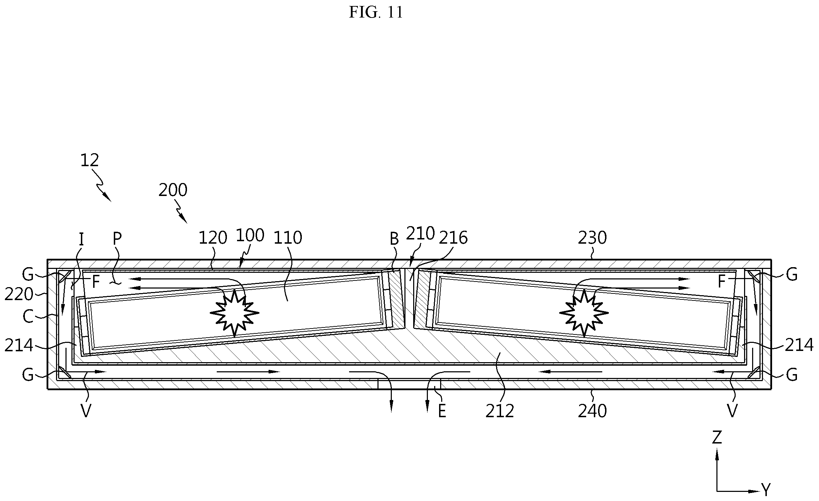

FIG. 11 is a diagram showing the battery pack 12 according to a second embodiment of the present disclosure. In this instance, in FIG. 11, venting gas is indicated by 'V', and flame is indicated by 'F'.

The battery pack 12 according to this embodiment is similar to the battery pack 12 of the previous embodiment, and redundant descriptions of the components that are substantially identical or similar to the previous embodiment are omitted, and the following description is made based on difference(s) between this embodiment and the previous embodiment.

Referring to FIG. 11, the battery pack 12 may further include a guide portion G.

The guide portion G may be disposed at a location corresponding to the corner of the pack housing 200, and configured to guide venting gas and/or flame toward the outlet port E. In an example, the guide portion G may include a material having high heat resistance and strength. At least one guide portion G may be included at the location corresponding to the corner of the pack housing 200. Additionally, the surface of the guide portion G may have a textured structure to suppress parts of the flow of flame.

In an example, any one of the guide portions G may be disposed in an area corresponding to the connected part between the side frame 220 and the cover 230 in the flow channel C. The guide portion G may have one end coupled to the inner top of the flow channel C, and the other end coupled to the inner side of the flow channel C. Additionally, the guide portion G may be configured to slope from the inner top of the flow channel C to the inner side of the flow channel C.

Additionally, the other of the guide portions G may be disposed in an area corresponding to the connected part between the side frame 220 and the floor frame 240 in the flow channel C. The guide portion G may have one end coupled to the inner side of the flow channel C and the other end coupled to the inner bottom of the flow channel C. Additionally, the guide portion G may be configured to slope from the inner side of the flow channel C to the inner bottom of the flow channel C.

By this exemplary configuration, the flow of venting gas in the flow channel C may be smoothly guided to the outlet port E. Additionally, since some of the flow of flame are suppressed by the guide portion G, it is possible to allow the flame having strong linearity to be vented out of the pack housing 200 slowly, thereby minimizing the likelihood that the flame becomes a fire.

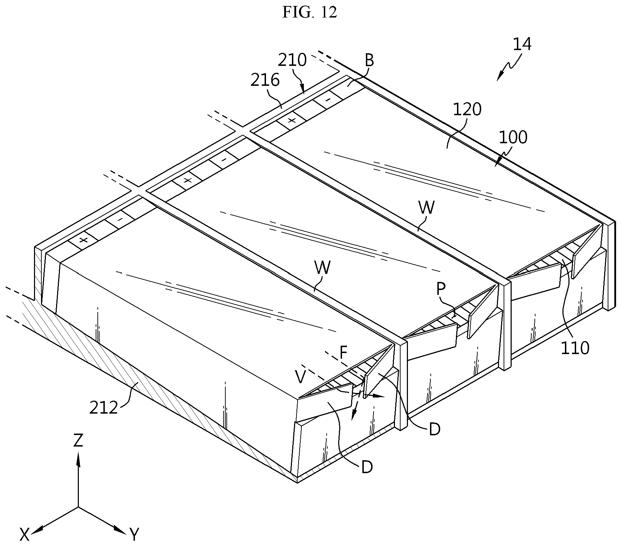

FIG. 12 is a diagram showing the battery pack 14 according to a third embodiment of the present disclosure. In this instance, in FIG. 12, venting gas is indicated by 'V', and flame is indicated by 'F'.

The battery pack 14 according to this embodiment is similar to the battery pack 14 of the previous embodiment, and redundant descriptions of the components that are substantially identical or similar to the previous embodiment are omitted, and the following description is made based on difference(s) between this embodiment and the previous embodiment.

Referring to FIG. 12, the battery pack 14 may further include a bent portion D.

The bent portion D may be disposed at an exit of the venting path P and bent in the lengthwise direction of the pack housing 200.

The bent portion D may be disposed on the rear side of a module case 120 and bent in the lengthwise direction of the pack housing 200.

Specifically, the bent portion D may be disposed at two rear ends of the module case 120 or only one rear end of the module case 120.

The bent portion D may further provide directionality to the vent direction of venting gas and/or flame produced in the battery module 100 toward the flow channel C. That is, as shown in FIG. 12, venting gas and/or flame produced in the battery module 100 may be vented toward the flow channel C after it strikes the bent portion D. Additionally, the propagation of venting gas and/or flame produced in one battery module 100 to the adjacent other battery module 100 may be suppressed by the bent portion D.

In an embodiment, as shown in FIG. 12, a pair of bent portions D may be included, facing each other in the lengthwise direction of the pack housing 200 at the two rear ends of the module case 120. In this instance, the pair of bent portions D may be bent such that they face each other in the lengthwise direction of the pack housing 200.

In this case, it is possible to easily guide the venting of venting gas and/or flame toward the flow channel C and minimize multiple simultaneous fires between the adjacent battery modules 100 in the lengthwise direction of the pack housing 200.

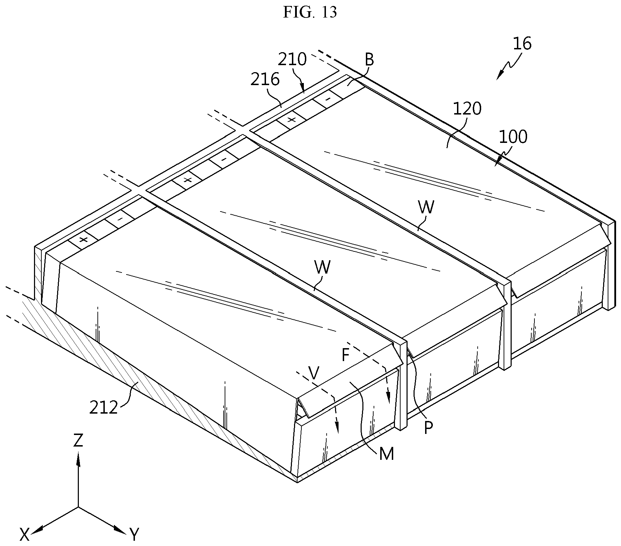

FIG. 13 is a diagram showing the battery pack 16 according to a fourth embodiment of the present disclosure. In this instance, in FIG. 13, venting gas is indicated by 'V', and flame is indicated by 'F'.

The battery pack 16 according to this embodiment is similar to the battery pack 16 of the previous embodiment, and redundant descriptions of the components that are substantially identical or similar to the previous embodiment are omitted, and the following description is made based on difference(s) between this embodiment and the previous embodiment.

Referring to FIG. 13, the battery pack 16 may further include a flow restriction portion M.

The flow restriction portion M may extend to a predetermined length from the top of the exit of the venting path P.

Specifically, the flow restriction portion M may extend to the predetermined length from the rear top of the module case 120 and bend down at a predetermined angle.

The flow restriction portion M may guide the venting of venting gas and/or flame produced in the battery module 100 toward the flow channel C more easily. That is, as shown in FIG. 13, venting gas and/or flame produced in the battery module 100 may strike the flow restriction portion M, whereby the upward flow of venting gas and/or flame may be restricted. Since the upward flow of venting gas and/or flame is restricted, the venting gas and/or flame may be spontaneously vented toward the flow channel C.

Additionally, by this exemplary configuration, it is possible to prevent some of venting gas and/or flame vented toward the rear side of the battery module 100 from flowing through the space between the top of the battery module 100 and the cover 230 and staying in the pack housing 200.

As described above, according to an embodiment of the present disclosure, with the venting path P along which the venting gas and/or flame may be easily vented in a direction, it is possible to minimize the venting of venting gas and/or flame in the direction in which the module terminal B is disposed in the battery module 100.

Additionally, it is possible to suppress the cause of fires in the battery packs 10, 12, 14, 16 and enhance structural stability of the battery packs 10, 12, 14, 16.

In addition to the above-described components, the battery module according to the present disclosure may be included in the battery pack together with various types of devices to control the charge/discharge of the battery module, for example, a Battery Management System (BMS), a current sensor and a fuse. That is, the battery pack according to the present disclosure may include at least one battery module according to the present disclosure.

Additionally, the battery pack according to the present disclosure may be applied to a vehicle such as an electric vehicle. That is, the vehicle according to the present disclosure may include at least one battery pack according to the present disclosure.

While the present disclosure has been hereinabove described with regard to a limited number of embodiments and drawings, the present disclosure is not limited thereto, and it is apparent that a variety of changes and modifications may be made by those skilled in the art within the technical aspect of the present disclosure and the scope of the appended claims and their equivalents.

The terms indicating directions such as upper, lower, left, right, front and rear are used herein for convenience only, and it is obvious to those skilled in the art that these terms may change depending on the position of the stated element or an observer.

## Claims

1. A battery pack, comprising:
a battery module having a venting path configured to prevent venting gas or flame from being vented toward a front side where a module terminal is disposed, and guide the venting of the venting gas or flame toward a rear side, wherein the venting path becomes wider as it goes to the rear side; and
a pack housing accommodating the battery module.

2. The battery pack according to claim 1, wherein the pack housing includes a support frame configured to lift up the battery module such that the front side is higher than the rear side.

3. The battery pack according to claim 2, wherein the support frame further includes a sloping portion, wherein the sloping portion slopes with its height increasing as it goes to one side, and is disposed below the battery module, and
wherein the front side of the battery module is disposed on the one side of the sloping portion.

4. The battery pack according to claim 2, wherein the support frame further includes a module fixing portion configured to support the rear side of the battery module.

5. The battery pack according to claim 2, wherein the pack housing further includes an outlet port, through which the venting gas or flame is vented out of the pack housing, and
wherein the rear side of the battery module faces the outlet port.

6. The battery pack according to claim 5, wherein the outlet port is formed in the pack housing at a location after the venting gas or flame is bent at least once.

7. The battery pack according to claim 6, wherein the outlet port is disposed in the pack housing on an opposite side to a location at which the battery module is disposed with respect to the support frame.

8. The battery pack according to claim 7, wherein the outlet port is disposed in the pack housing on the opposite side to the front side of the battery module with respect to the support frame.

9. The battery pack according to claim 5, wherein the pack housing further includes a flow channel in communication with the venting path and the outlet port.

10. The battery pack according to claim 5, further comprising:
a guide portion disposed at a location corresponding to a corner of the pack housing and configured to guide the venting gas or flame toward the outlet port.

11. The battery pack according to claim 2, wherein the battery module includes a pair of battery modules with respect to the support frame, and
wherein the pair of battery modules are arranged such that the front side of each battery module faces each other in the pack housing.

12. The battery pack according to claim 11, wherein the support frame further includes a reinforcement portion to define the pair of battery modules, the reinforcement portion being connected to the pack housing.

13. The battery pack according to claim 2, wherein the battery module includes a plurality of battery modules along a lengthwise direction of the support frame, and
wherein the plurality of battery modules is separated from each other by a partition connected to the support frame when viewed in the lengthwise direction of the support frame.

14. A vehicle comprising at least one battery pack according to any one of claims 1 to 13.

15. A battery module, comprising:
a cell assembly; and
a module case accommodating the cell assembly, and having a venting path configured to prevent venting gas or flame from being vented toward a front side where a module terminal is disposed, and guide the venting of the venting gas or flame toward a rear side, wherein the venting path becomes wider as it goes to the rear side.
